# EUROPEAN PATENT APPLICATION

(11) **EP 4 806 956 A1**
(43) Date of publication of application: **16.09.2026**
(21) Application number: 24909622.3
(22) Date of filing: 26.06.2024
(51) Int. Cl.: C09C 1/54, H01M 4/62, H01M 4/13, H01M 10/0525

(54) **HIGHLY CONDUCTIVE CARBON BLACK, PREPARATION METHOD THEREFOR, DEVICE, ELECTRODE, AND SECONDARY BATTERY**

(30) Priority: 25.12.2023 CN 202311792302
(71) Applicant: Jiaozuo City Hexing Chemical Industry Co., Ltd., Jiaozuo, Henan 454150 (CN)
(72) Inventor: JIANG, Zhihang, Jiaozuo, Henan 454150 (CN); YANG, Ningning, Jiaozuo, Henan 454150 (CN); LEI, Jingang, Jiaozuo, Henan 454150 (CN); SUN, Tiantian, Jiaozuo, Henan 454150 (CN); SUO, Rong, Jiaozuo, Henan 454150 (CN); LIU, Xinsheng, Jiaozuo, Henan 454150 (CN); JIA, Shuili, Jiaozuo, Henan 454150 (CN); ZHU, Licai, Jiaozuo, Henan 454150 (CN)
(74) Representative: Leotta, Antonio
(86) International application number: PCT/CN2024/101720
(87) International publication number: WO 2025/138662

(57) **Abstract**

The present disclosure relates to the technical field of carbon black materials, and in particular relates to highly conductive carbon black, a preparation method therefor, a device, an electrode, and a secondary battery. The highly conductive carbon black has an average primary particle size of 20-40 nm; and the carbon black primary particles comprise spheres and graphene-like protruding pieces located on the surfaces of the spheres. The carbon black of the present disclosure has graphene-like protruding pieces on the surfaces of the spheres, allowing the carbon black to simultaneously have properties of both carbon black and graphene; node-to-surface contact can be formed between primary particles or with electrode material particles, thereby improving conductivity; and the present invention can significantly improve the conductivity of a slurry and an electrode.

## Description

### CROSS REFERENCE TO THE RELATED APPLICATIONS

The present invention claims priority to and benefit of Chinese Patent Application No. 202311792302.2 filed with the China National Intellectual Property Administration on December 25, 2023, and entitled "HIGHLY CONDUCTIVE CARBON BLACK, PREPARATION METHOD THEREFOR, DEVICE, ELECTRODE, AND SECONDARY BATTERY", which is incorporated herein by reference in entirety.

### TECHNICAL FIELD

The present invention relates to the technical field of carbon black materials, and particularly relates to a highly conductive carbon black (high-conductivity carbon black), a preparation method therefor, a device, an electrode, and a secondary battery.

### BACKGROUND ART

Conductive materials are typically added to positive electrodes and/or negative electrodes of lithium-ion secondary batteries to improve electrical conductivity. Generally, point-type conductive materials, such as carbon black, are primarily added to electrodes; in addition, linear conductive materials, such as carbon nanotubes and carbon nanofibers, can also be added to further enhance the electrical conductivity of the electrodes.

However, although linear conductive materials have excellent electrical conductivity, their typical bundled form and/or entangled form makes them difficult to disperse uniformly in an electrode slurry, leading to poor uniformity of electrode resistance. To address the dispersion issue, functional groups can be introduced into the linear conductive materials. However, the introduction of functional groups may cause side reactions on a surface of the conductive materials, making it difficult to achieve large-scale application in batteries.

Furthermore, graphene possesses excellent conductivity and can be used as a planar conductive material. However, a preparation process of a highly conductive monolayer graphene is difficult and costly. In addition, when graphene thickness exceeds a certain level or planar sizes are too large, excessive surface contact with graphene may impede electrolyte movement within the electrode, thereby leading to deterioration of battery performance.

In view of this, the present invention is proposed specifically.

### SUMMARY

The present invention aims to provide a highly conductive carbon black, a preparation method therefor, a device, an electrode, and a secondary battery. The carbon black of the present invention has properties of both carbon black and graphene, significantly improving the electrical conductivity, and featuring a simple preparation method.

To achieve the above-mentioned objectives of the present invention, in one aspect, the present invention provides a highly conductive carbon black, wherein an average particle size of primary particles of the carbon black ranges from 20 nm to 40 nm; and
the primary particles of the carbon black each include a spherical body (sphere) and graphene-like sheet protrusions (graphene-like protruding pieces) located on a surface of the spherical body.

In a specific embodiment of the present invention, the graphene-like sheet protrusions are multilayer graphene. Further, the number of layers of multilayer graphene is ≤10, such as 2 to 8 layers.

In a specific embodiment of the present invention, a maximum distance between any two points on the graphene-like sheet protrusions ranges from 10 nm to 50 nm.

In a specific embodiment of the present invention, the carbon black is acetylene black.

In a specific embodiment of the present invention, the graphene-like sheet protrusions are grown in situ on the surface of the spherical body.

In a specific embodiment of the present invention, the carbon black has a BET specific surface area ranging from 65 m²/g to 180 m²/g, and a DBP oil absorption value (number) ranging from 235 m²/g to 375 cm³/100g.

In a specific embodiment of the present invention, in a 2D Raman spectrum of the carbon black at an excitation wavelength of 532 nm, a full width at half maximum of a 2D Raman scattering peak (Δ2D) in a range of 2648-2660 cm⁻¹ ranges from 80 cm⁻¹ to 90 cm⁻¹; and a ratio of a peak intensity of the 2D Raman scattering peak to a peak intensity of a G Raman scattering peak ranges from 0.55 to 0.87. Further, a Raman microcrystallite planar size of the carbon black ranges from 32 Å to 51 Å.

In a specific embodiment of the present invention, a degree of crystallinity of the carbon black ranges from 42% to 52%, such as from 46% to 52%.

In a specific embodiment of the present invention, a powder resistivity of the carbon black ranges from 0.13 Ω/cm to 0.206 Ω/cm.

In another aspect, the present invention provides a preparation method for any one of the above-mentioned carbon blacks, including a step of:
subjecting acetylene and methane to a thermal pyrolysis reaction in a hydrogen gas-containing and air-isolated environment to form the carbon black.

Herein, flow rates of acetylene, methane, and hydrogen gas are adjusted such that a molar ratio of H to C in a thermal pyrolysis reaction zone is >1.

In a specific embodiment of the present invention, the molar ratio of H to C in the thermal pyrolysis reaction zone ranges from 2 to 3.

In a specific embodiment of the present invention, gas flow directions of the acetylene and the methane are opposite; and a gas flow direction of the hydrogen gas is arranged at an included angle to the gas flow directions of the acetylene and the methane. Further, the included angle ranges from 45° to 60°.

In a further aspect, the present invention provides a device for implementing the preparation method for any one of the above-mentioned carbon blacks, including: a pyrolysis furnace body, provided therein with a reaction chamber.

The pyrolysis furnace body is provided with two nozzles communicating with the reaction chamber; the pyrolysis furnace body is provided with a furnace head corresponding to the two nozzles; and the furnace head is provided with at least one gas introduction tube communicating with the reaction chamber.

The two nozzles include a first nozzle and a second nozzle.

In a specific embodiment of the present invention, the device includes two gas introduction tubes, wherein the two gas introduction tubes are provided opposite to each other on two sides of the furnace head.

In a specific embodiment of the present invention, a central axis of the gas introduction tube is arranged at an included angle to a central axis of the furnace head. Further, the included angle ranges from 30° to 45°.

In a further aspect, the present invention provides an electrode, including any one of the above-mentioned carbon blacks.

In a further aspect, the present invention provides a secondary battery, including a positive electrode, a negative electrode, an electrolyte, and a separator, wherein at least one of the positive electrode and the negative electrode is any one of the above-mentioned electrodes.

Compared with the prior art, the present invention has following beneficial effects.
(1) The carbon black of the present invention has the graphene-like sheet protrusions on the surface of the spherical body, and has the properties of both carbon black and graphene, which enables the formation of point-to-surface (node-to-surface) contact between the primary particles or with electrode material particles, thereby improving the electrical conductivity and significantly enhancing the electrical conductivity of the slurry and the electrode.
(2) The preparation method for the carbon black of the present invention involves a simple process and relatively low production costs.

### BRIEF DESCRIPTION OF THE DRAWINGS

In order to more clearly illustrate technical solutions of embodiments of the present invention, drawings that need to be used in the embodiments will be briefly introduced below. It should be understood that the drawings described below only illustrate some embodiments of the present invention, and thus should not be construed as limitation to the scope. Those ordinarily skilled in the art could also obtain other relevant drawings based on these drawings without making any inventive efforts.
FIG. 1 is a structural schematic diagram of a device for preparing a highly conductive carbon black provided by an embodiment the present invention;
FIG. 2 is a top view of nozzles and a furnace head provided by an embodiment of the present invention;
FIG. 3 is a transmission electron microscopy image of the carbon black prepared in Example 1 of the present invention;
FIG. 4 is a partially enlarged view of the transmission electron microscopy image of FIG. 3;
FIG. 5 is another partially enlarged view of the transmission electron microscopy image of FIG. 3;
FIG. 6 is a Raman spectrum of the carbon black prepared in Example 1 of the present invention;
FIG. 7 is a Raman spectrum of the carbon black prepared in Example 2 of the present invention; and
FIG. 8 is a Raman spectrum of the carbon black prepared in Example 3 of the present invention.

### Reference numerals:

10-pyrolysis furnace body; 11-reaction chamber; 12-furnace head;
13-nozzle; 14-gas introduction tube; 15-discharge outlet;
131-first nozzle; and 132-second nozzle.

### DETAILED DESCRIPTION OF THE EMBODIMENTS

The technical solutions of the present invention will be clearly and completely described below in combination with drawings and specific embodiments. However, those skilled in the art would understand that the embodiments described below are only some but not all embodiments of the present invention, and they are only used to illustrate the present invention but should not be regarded as limitation to the scope of the present invention. Based on the embodiments of the present invention, all other embodiments obtained by those ordinarily skilled in the art without making inventive efforts shall fall within the scope of protection of the present invention. Where the specific conditions are not specified in the embodiments, conventional conditions or conditions recommended by the manufacturer shall be followed. Reagents or instruments used without a designated manufacturer are all conventional products that are commercially available.

Carbon black, as a commonly used conductive material, is widely applied in various industries, such as the field of secondary batteries. With the development requirements in the field of batteries, it is necessary to further improve the electrical conductivity of carbon black.

In one aspect, the present invention provides a highly conductive carbon black, wherein an average particle size of primary particles of the carbon black ranges from 20 nm to 40 nm; and
each of the primary particles of the carbon black includes a spherical body and graphene-like sheet protrusions located on a surface of the spherical body.

For the carbon black of the present invention, the graphene-like sheet protrusions are formed on the surface of the spherical body, and the graphene-like sheet protrusions on the surface of the spherical body resemble solar prominences. The carbon black of the present invention has both the carbon black core spherical body and the graphene-like sheet protrusions, allowing it to have the properties of both carbon black and graphene, which can form point-to-surface contact between the primary particles or with electrode material particles, thereby improving the electrical conductivity and offering significant advantages over the point-to-point contact of conventional carbon black.

For example, in different embodiments, the average particle size of the primary particles of the carbon black of the present invention can be 20 nm, 25 nm, 28 nm, 30 nm, 32 nm, 35 nm, 38 nm, or 40 nm or in a range constituted by any two thereof.

It should be noted that the primary particles of the carbon black of the present invention are substantially spherical, and the average particle size of the primary particles of the carbon black is a value obtained by averaging the particle sizes measured using photos taken by the transmission electron microscope, etc. In addition, the particle size is an equivalent circle diameter calculated from areas of the primary particles.

In a specific embodiment of the present invention, the graphene-like sheet protrusions are multilayer graphene. Further, the number of layers of the multilayer graphene is ≤10, such as 2 to 8 layers.

The graphene-like sheet protrusions of the present invention are the multilayer graphene, and the number of layers of the multilayer graphene can be ≤10, ≤8, ≤5, ≤4, etc. Specifically, the number of layers of the multilayer graphene can be 2, 3, 4, 5, 6, 7, or 8 or in a range constituted by any two thereof.

The number of graphene-like sheet protrusions on the surface of the spherical body of the present invention is ≥1, such as 1, 2, 3, or 4, with no limitation to the specific number. When the number of graphene-like sheet protrusions located on the surface of the spherical body is ≥2, the number of layers of the multilayer graphene in each graphene-like sheet protrusion can be independently selected from 2 to 8 layers, and can be the same or different.

When the number of layers of the multilayer graphene in the graphene-like sheet protrusions on the surface of the spherical body meets above requirements, it can exhibit unique flexibility of graphene sheets and improve surface contact between the graphene-like sheet protrusions and between the graphene-like sheet protrusions and the surface of the spherical body of the carbon black, thereby improving the electrical conductivity.

In a specific embodiment of the present invention, a maximum distance between any two points in the graphene-like sheet protrusions ranges from 10 nm to 50 nm.

For example, in different embodiments, the maximum distance between any two points in the graphene-like sheet protrusions can be 10 nm, 20 nm, 30 nm, 40 nm, or 50 nm or in a range constituted by any two thereof. Herein, the maximum distance between any two points refers to a length L of the longest line segment between one point and another point in the graphene-like sheet protrusions as observed by transmission electron microscopy (TEM). In addition, the above-mentioned maximum distance refers to an average of L of 100 graphene-like sheet protrusions observed by TEM.

In practical operation, the maximum distance between any two points in a specific graphene-like sheet protrusion can be controlled by adjusting the thermal pyrolysis process, such as by adjusting flow rates of methane and hydrogen gas. The maximum distance between any two points in the graphene-like sheet protrusions of the present invention is much smaller than that in conventional graphene. Due to the relatively small size, the graphene-like sheet protrusions can effectively reduce a resistance to movement of an electrolyte solution in the electrode, significantly reduce ionic hindrance effect, and improve smoothness of ion diffusion from the electrolyte in the electrode.

In a specific embodiment of the present invention, the carbon black is acetylene black.

In a specific embodiment of the present invention, the graphene-like sheet protrusions are grown in situ on the surface of the spherical body.

The graphene-like sheet protrusions are formed on the surface of the spherical body by a method of in-situ growth, which ensures stability of bonding of the graphene-like sheet protrusions on the surface of the spherical body in each primary particle and further improves the electrical conductivity.

In a specific embodiment of the present invention, the carbon black has a BET specific surface area ranging from 65 m²/g to 180 m²/g, and a DBP oil absorption value ranging from 235 m²/g to 375 cm³/100g.

Herein, the BET specific surface area is measured according to the method in GB/T 19587-2004. The more developed the microporous structure is, the larger the BET specific surface area is; that is, the BET specific surface area can reflect development degree of porous structure of carbon black. The BET specific surface area of the carbon black of the present invention can be 65 m²/g, 85 m²/g, 100 m²/g, 120 m²/g, 140 m²/g, 150 m²/g, 160 m²/g, or 180 m²/g or in a range constituted by any two thereof. The BET specific surface area within the above range indicates that the carbon black has a well-developed porous structure, which increases the number of contact points with other substances (such as active materials in electrodes), and allows the carbon black to fully exert the electrical conductivity; in addition, it possesses high ability to impart electrical conductivity due to its percolation effect in electrode materials.

The DBP oil absorption value is determined using the standard method in GB/T 3780.2-2017 Carbon black Part 2: Determination of oil absorption number. The DBP oil absorption value is used to characterize void volume inside carbon black aggregates. The larger the void volume of the carbon black aggregates is, the larger the DBP oil absorption value is, indicating that the carbon black has a more developed chain-branch structure. The DBP oil absorption value of the carbon black of the present invention can be 235 cm³/100g, 250 cm³/100g, 280 cm³/100g, 300 cm³/100g, 320 cm³/100g, 340 cm³/100g, 350 cm³/100g, or 375 cm³/100g or in a range constituted by any two thereof. The DBP oil absorption value within the above range indicates that the carbon black of the present invention has a well-developed conductive network.

In a specific embodiment of the present invention, in a 2D Raman spectrum of the carbon black at an excitation wavelength of 532 nm, a full width at half maximum of a 2D Raman scattering peak (Δ2D) in a range of 2648-2660 cm⁻¹ ranges from 80 cm⁻¹ to 90 cm⁻¹; and a ratio of a peak intensity of the 2D Raman scattering peak to a peak intensity of a G Raman scattering peak ranges from 0.55 to 0.87. Further, a Raman microcrystallite planar size of the carbon black ranges from 32 Å to 51 Å.

Herein, the specific testing method and testing parameters of the 2D Raman spectrum are as follows:
Using a laser Raman spectrometer, several particles of the carbon black sample to be tested are placed on a glass slide and scraped flat several times with a spatula. Test is conducted under following measurement conditions: YAG laser (excitation wavelength): 532 nm, grating (groove density): 600 gr/mm, filter: D0.6, objective lens magnification: 100×, exposure time: 150 s, and cumulative number of times: 2 times.

The 2D Raman spectrum can reflect the number of graphene layers, stacking pattern, edge structure, etc., in the graphene-like sheet protrusions of the carbon black. A Raman spectrum of graphene consists of several peaks, primarily G Raman scattering peak, D Raman scattering peak, and 2D Raman scattering peak. Herein, the G Raman scattering peak is caused by in-plane vibrations of sp2 carbon atoms; the D Raman scattering peak is a disordered vibration peak of graphene, which can reflect structural defects or edges in a graphene sample; and the 2D Raman scattering peak is a double-phonon resonance second-order Raman peak, which can reflect interlayer stacking pattern of carbon atoms in the graphene sample. Intensity of the G Raman scattering peak and peak shape of the 2D Raman scattering peak can reflect the number of graphene layers. For graphene with different layers, in addition to different peak shapes of the 2D Raman scattering peak, the intensity of the G Raman scattering peak also increases approximately linearly with the increase in the number of layers.

The Raman spectrum of carbon includes two main "resonance" bands at approximately 1340 cm⁻¹ and 1580 cm⁻¹, denoted as the "D" and "G" bands, respectively. Raman microcrystallite planar size (La) is measured by Raman spectroscopy, and regression analysis yields following empirical relationship: La = 43.5 × (area of G band / area of D band), wherein La is measured in Ångström (Å). Crystal domains of the carbon black can be characterized by La, which can indicate a degree of graphitization; and the higher the La value is, the higher the degree of graphitization is.

For example, in different embodiments, in the 2D Raman spectrum at the excitation wavelength of 532 nm, the carbon black exhibits a peak position range of the 2D Raman scattering peak that can be selected from, but is not limited to, 2648 cm⁻¹, 2650 cm⁻¹, 2652 cm⁻¹, 2655 cm⁻¹, 2658 cm⁻¹, and 2660 cm⁻¹ or a range constituted by any two thereof; the full width at half maximum corresponding to the 2D Raman scattering peak (Δ2D) can be selected from, but is not limited to, 80 cm⁻¹, 81 cm⁻¹, 82 cm⁻¹, 83 cm⁻¹, 84 cm⁻¹, 85 cm⁻¹, 86 cm⁻¹, 87 cm⁻¹, 88 cm⁻¹, 89 cm⁻¹, and 90 cm⁻¹ or a range constituted by any two thereof; the ratio I_{2D}/I_{G} of the peak intensity of the 2D Raman scattering peak (I_{2D}) to the peak intensity of the G Raman scattering peak (I_{G}) can be selected from, but is not limited to, 0.55, 0.60, 0.63, 0.68, 0.70, 0.75, 0.80, 0.85, and 0.87 or a range constituted by any two thereof; and the Raman microcrystallite planar size of the carbon black can be selected from, but is not limited to, 32 Å, 35 Å, 38 Å, 40 Å, 42 Å, 45 Å, and 51 Å or a range constituted by any two thereof.

Through in-depth research, the inventors found that when the 2D Raman spectrum of the carbon black meets the above conditions, the graphene-like sheet protrusions on the surface of the spherical body have a suitable stacking pattern, number of layers, etc., thereby further improving the electrical conductivity of the carbon black.

In a specific embodiment of the present invention, a degree of crystallinity of the carbon black ranges from 42% to 52%, such as from 46% to 52%.

For example, in different embodiments, the degree of crystallinity of the carbon black can be 42%, 45%, 46%, 48%, 50%, or 52% or in a range constituted by any two thereof.

The degree of crystallinity of carbon black, which can reflect its degree of graphitization, is measured from Raman spectrum as the ratio of the intensity of the G band to a sum of the intensities of the G band and the D band (I_{G}/I_{G+D}). Higher degree of graphitization further improves the electrical conductivity, which can improve battery capacity or the like when used as a conductive material in batteries.

In a specific embodiment of the present invention, a powder resistivity of the carbon black ranges from 0.13 Ω/cm to 0.206 Ω/cm.

For example, in different embodiments, the powder resistivity of the carbon black can be 0.13 Ω/cm, 0.14 Ω/cm, 0.15 Ω/cm, 0.16 Ω/cm, 0.18 Ω/cm, 0.20 Ω/cm or 0.206 Ω/cm or in a range constituted by any two thereof.

Herein, the powder resistivity is measured using a semiconductor powder resistivity tester (model FZ-2006), and test sample is prepared using a mold under a pressure of 83.5 kg. The carbon black of the present invention has a specific structure, a suitable morphology of the graphene-like sheet protrusions, and an appropriate degree of graphitization, which can further reduce the powder resistivity of the carbon black and improve the electrical conductivity.

In a further aspect, the present invention provides a preparation method for any one of the above-mentioned carbon blacks, including a step of:
subjecting acetylene and methane to a thermal pyrolysis reaction in a hydrogen gas-containing and air-isolated environment to form the carbon black.

Herein, flow rates of acetylene, methane, and hydrogen gas are adjusted such that a molar ratio of H to C in a thermal pyrolysis reaction zone is >1.

In the preparation method for the carbon black in the present invention, acetylene undergoes the thermal pyrolysis to generate nucleation cores of acetylene black, which then grow. Simultaneously, heat generated by the thermal pyrolysis of acetylene causes methane to crack, nucleate, and grow, thus producing a certain amount of hydrogen atoms. In addition, the hydrogen gas is supplied at the same time, making the reaction zone rich in hydrogen atoms. Abundant hydrogen atoms bond with dangling bonds at edges of surface carbon clusters of the acetylene black, slowing down and preventing curling and closure of the carbon clusters, thus forming a spherical surface of the acetylene black, thereby forming the graphene-like sheet protrusions on the spherical bodies of the acetylene black.

In a specific embodiment of the present invention, the molar ratio of H to C in the thermal pyrolysis reaction zone ranges from 2 to 3.

For example, in different embodiments, the molar ratio of H to C in the thermal pyrolysis reaction zone can be 2, 2.2, 2.5, 2.8, or 3 or in a range constituted by any two thereof. By adjusting the molar ratio of H to C in the thermal pyrolysis reaction zone within the above range, a hydrogen-rich environment is created in the reaction zone, further promoting the formation of the graphene-like sheet protrusions.

In practical operation, the flow rates of acetylene, methane, and hydrogen gas can be adjusted such that the molar ratio of H to C in the thermal pyrolysis reaction zone meets corresponding conditions. For example, the flow rate ratio of acetylene, methane, and hydrogen gas can be 10:5:(4.6 to 17.3).

In a specific embodiment of the present invention, gas flow directions of acetylene and methane are opposite; and a gas flow direction of the hydrogen gas is arranged at an included angle to the gas flow directions of acetylene and methane.

By adjusting the gas flow direction of the hydrogen gas at a certain included angle to the gas flow directions of acetylene and methane, the acetylene black generated by the pyrolysis of acetylene and methane can quickly pass through the reaction zone, thus avoiding presence of a recirculation zone that would terminate the reaction, and further promoting the formation of the graphene-like sheet protrusions on the spherical bodies of the acetylene black .

In a specific embodiment of the present invention, the included angle ranges from 45° to 60°. For example, the included angle can be 45°, 48°, 50°, 52°, 55°, 58° or 60° or in a range constituted by any two thereof.

In practical operation, the acetylene gas and air can be introduced into a system in advance, and combust to heat the reaction zone to about 850 °C (a temperature at which thermal pyrolysis can occur). Then, after air supply is stopped for a period of time, system environment is isolated from air. Subsequently, acetylene and methane undergo the thermal pyrolysis reaction in the hydrogen gas-containing and air-isolated environment.

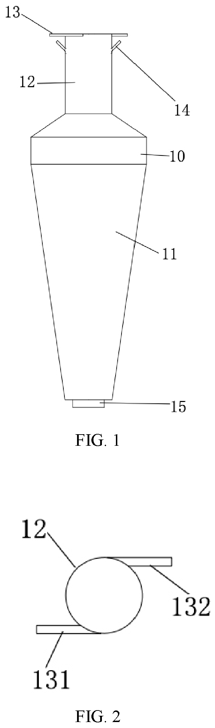

In a further aspect, the present invention provides a device for implementing any one of the preparation methods for the carbon black in the above, as shown in FIG. 1, including: a pyrolysis furnace body 10, provided with a reaction chamber 11 inside, configured to carry out a thermal pyrolysis reaction, wherein a chamber structure of the reaction chamber 11 is adaptable to a structure of the pyrolysis furnace body 10.

The pyrolysis furnace body 10 is provided with two nozzles 13 communicating with the reaction chamber 11 and configured to introduce gas into the reaction chamber 11. Herein, the two nozzles 13 can extend into the reaction chamber 11, so as to deliver gas into the reaction chamber 11, ensuring smooth progress of the thermal pyrolysis reaction.

The pyrolysis furnace body 10 is provided with a furnace head 12 corresponding to the two nozzles 13; and the furnace head 12 is provided with at least one gas introduction tube 14 communicating with the reaction chamber 11 and configured to introduce a hydrogen gas into the reaction chamber 11.

As shown in FIG. 2, the two nozzles 13 include a first nozzle 131 and a second nozzle 132. The first nozzle 131 is configured to introduce air or methane into the reaction chamber 11, and the second nozzle 132 is configured to introduce acetylene into the reaction chamber 11. The first nozzle 131 and the second nozzle 132 are provided on two opposite sides of the furnace head 12, close to one end of the furnace head 12, and central axes of the first nozzle 131 and the second nozzle 132 are perpendicular to a central axis of the furnace head 12. Jet directions of the first nozzle 131 and the second nozzle 132 are opposite.

In practical operation, air can be first introduced through the first nozzle 131, and the acetylene gas can be introduced through the second nozzle 132 and combust, raising temperature up to a certain temperature (e.g., 850 °C) to preheat the pyrolysis furnace. Then, after air supply is cut off for a period of time, the methane gas is supplied through the first nozzle 131, and the hydrogen gas is introduced through the gas introduction tube 14 to initiate the thermal pyrolysis reaction. The carbon black is collected after cooling.

In a specific embodiment of the present invention, two gas introduction tubes 14 are included, wherein the two gas introduction tubes 14 are provided opposite to each other on two sides of the furnace head 12.

In practical operation, the pyrolysis furnace body 10 can be provided with conventional heating components and temperature control components.

In a specific embodiment of the present invention, a central axis of the gas introduction tube 14 is set at an included angle to the central axis of the furnace head 12. Further, the included angle ranges from 30° to 45°. In subsequent embodiments, unless otherwise specified, the included angle is 40°, but it is not limited thereto.

By adjusting the included angle between the central axis of the gas introduction tube 14 and the central axis of the furnace head 12, acetylene black generated from the pyrolysis of acetylene and methane can quickly pass through the reaction zone, thus avoiding the presence of the recirculation zone that would terminate the reaction, and further promoting the formation of graphene-like sheet protrusions on the spherical bodies of acetylene black.

In a specific embodiment of the present invention, the pyrolysis furnace body 10 further includes a discharge outlet 15. The discharge outlet 15 is provided at one end of the reaction chamber 11 away from the furnace head 12. Upon completion of the reaction, the carbon black leaves the reaction chamber 11 through the discharge outlet 15.

In a specific embodiment of the present invention, the pyrolysis furnace body 10 further includes a heater (not shown in figures). The heating method of the heater is induction heating, resistance heating, etc., but is not limited thereto. The heater is configured to heat the reaction zone of the reaction chamber 11 so as to ensure smooth progress of the pyrolysis reaction.

In a further aspect, the present invention provides an electrode, including any one of the above carbon blacks.

Herein, the carbon black is used as a conductive material for the preparation of the electrode. The carbon black can be used as sole conductive material or in combination with other conductive materials.

In a further aspect, the present invention provides a secondary battery, including a positive electrode, a negative electrode, an electrolyte, and a separator, wherein at least one of the positive electrode and the negative electrode is any one of above electrodes.

Herein, the positive electrode active material or negative electrode active material can be adjusted according to actual needs and is not limited to any one type. In following embodiments, only one kind of active material is used for illustration, and should not be construed as limiting the types of active materials.

### Examples 1 to 3

Examples 1 to 3 provide the preparation method for the highly conductive carbon black, using the device shown in FIG. 1 for preparation, including following steps.
(1) The acetylene gas at a flow rate of 10 Nm³/h and air at a flow rate of 60 Nm³/h were introduced into the pyrolysis furnace body 10 and combusted, raising temperature up to 850 °C to preheat the pyrolysis furnace body 10, wherein air was supplied through the first nozzle 131 and acetylene was supplied through the second nozzle 132; and
(2) Acetylene continued to be supplied through the second nozzle 132, and after air supply was cut off for a period of time to ensure that the pyrolysis furnace was isolated from air, the heater was used for heating. The methane gas was supplied through the first nozzle 131, and the hydrogen gas was supplied through the gas introduction tube 14. The molar ratio of H to C in the reaction chamber 11 was controlled to range from 2 to 3. After the thermal pyrolysis reaction in the reaction chamber 11, resulting carbon black was collected after cooling.

In the preparation methods of Examples 1 to 3, the flow rates of the acetylene gas, methane gas, and hydrogen gas in step (2) are listed in Table 1.

**Table 1 Flow Rate Information**

| No. | Acetylene (Nm³/h) | Methane (Nm³/h) | Hydrogen Gas (Nm³/h) | H/C (molar ratio) |
|---|---|---|---|---|
| Example 1 | 10 | 5 | 4.6 | 2 |
| Example 2 | 10 | 5 | 11 | 2.5 |
| Example 3 | 10 | 5 | 17.3 | 3 |

### Example 4

The present example provides the preparation method for the electrode slurry, including following steps:
Positive electrode active material LiCoO₂, polyvinylidene fluoride, and carbon black were weighed at a mass ratio of 96:2:2, and mixed evenly in an appropriate amount of N-methylpyrrolidone to obtain the electrode slurry, wherein the carbon blacks in various electrode slurries were the carbon blacks obtained in Examples 1 to 3, respectively, and corresponding resulting electrode slurries were designated as Example 4-1, Example 4-2, and Example 4-3, respectively.

### Comparative Example 1

Comparative Example 1 provides a commercially available carbon black (SP).

Comparative Example 1 further provides an electrode slurry, prepared by the method of Example 4, except that the carbon black in Example 4 was replaced with an equal weight of the commercially available carbon black SP.

### Comparative Example 2

Comparative Example 2 provides a carbon black, prepared by the method of Example 1, except that the hydrogen gas was not supplied in step (2).

Comparative Example 2 further provides an electrode slurry, prepared by the method of Example 4, except that the carbon black in Example 4 was replaced with an equal weight of carbon black in Comparative Example 2.

### Experimental Example 1

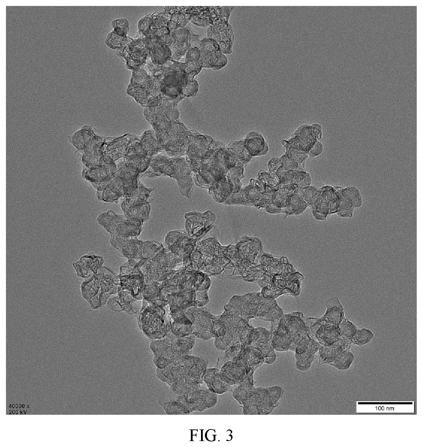

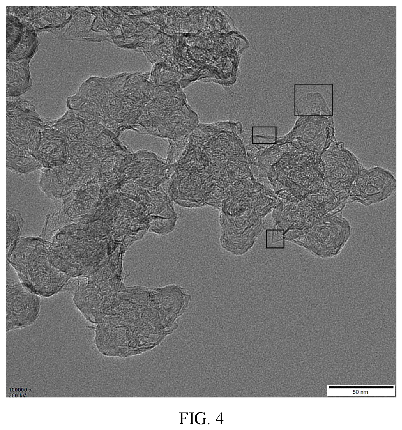

FIG. 3 to FIG. 5 are transmission electron microscopy images of the carbon black prepared according to Example 1 of the present invention. As can be seen from the images, the primary particles of the carbon black of the present invention are substantially spherical, and structures thereof each include the spherical body and the graphene-like sheet protrusions (resembling solar prominences) located on the spherical body. Due to the graphene-like sheet protrusions on the surfaces of the spherical bodies of carbon black, the carbon black of the present invention has the properties of both carbon black and graphene, enabling the formation of point-to-surface contact between the primary particles and with electrode material particles, thereby improving the electrical conductivity, showing significant advantages over the point-to-point contact of conventional conductive dielectric carbon black.

In addition, it can be seen from the transmission electron microscopy images that the maximum distance between any two points in the graphene-like sheet protrusions ranges from 10 nm to 50 nm.

Specifically, the size of the primary particles of the carbon blacks in different examples and comparative examples, as well as-where the graphene-like sheet protrusions are present-the corresponding number of layers in the graphene-like sheet protrusions (average layers of 100 graphene-like sheet protrusions observed by transmission electron microscopy) and the maximum distance between any two points are listed in Table 2, respectively.

**Table 2 Morphology Information of Carbon Blacks in Different Examples and Comparative Examples**

| No. | Average Particle Size of Primary Particles (nm) | Number of Layers in Graphene-like Sheet Protrusions (layers) | Maximum Distance Between Any Two Points (nm) |
|---|---|---|---|
| Example 1 | 40 | 3 | 10 |
| Example 2 | 35 | 5 | 35 |
| Example 3 | 20 | 10 | 50 |
| Comparative Example 1 | 40 | - | - |
| Comparative Example 2 | 45 | - | - |

As can be seen from Table 2, the average particle size of the primary particles of the carbon black of the present invention ranges from 20 nm to 40 nm, the number of multilayer graphene in the graphene-like sheet protrusions is ≤10, and the maximum distance between any two points in the graphene-like sheet protrusions ranges from 10 nm to 50 nm, which structural characteristics allow the carbon black to have significant advantages over the point-to-point contact of conventional conductive dielectric carbon black.

### Experimental Example 2

Raman spectrum test was performed on the carbon blacks of different examples and comparative examples. The specific testing method was as follows: using a laser Raman spectrometer, several particles of carbon black sample to be tested were placed on a glass slide and scraped flat several times with a spatula. The test was conducted under following measurement conditions: YAG laser (excitation wavelength): 532 nm, grating: 600 gr/mm, filter: D0.6, objective lens magnification: 100×, exposure time: 150 s, and cumulative number of times: 2 times.

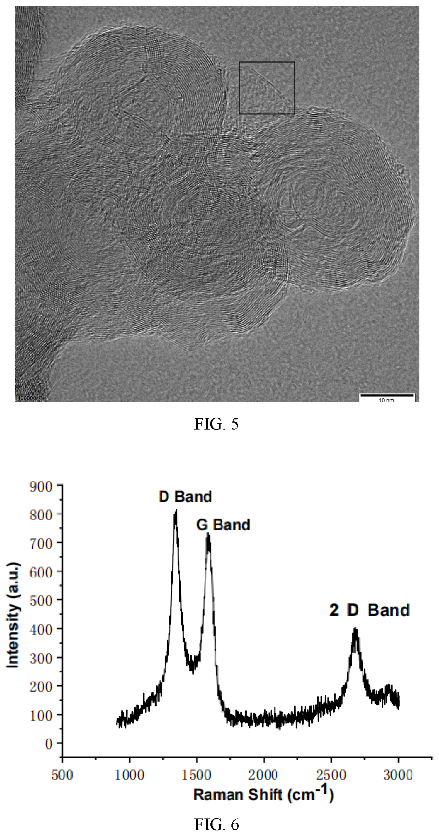

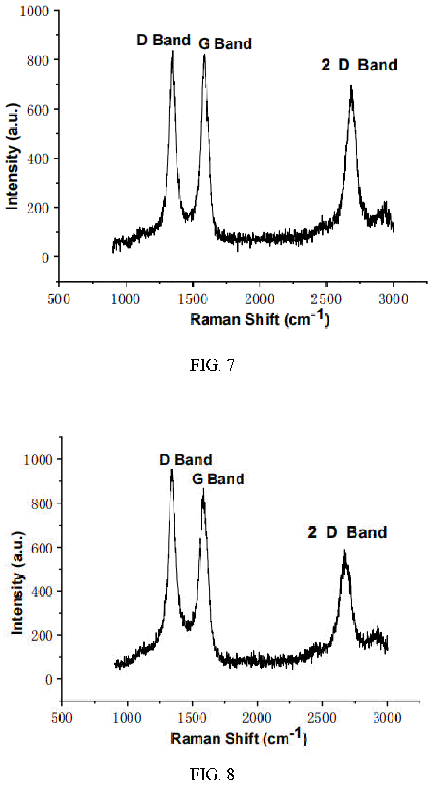

Raman spectra of Examples 1 to 3 are used as examples to illustrate the characteristics of the carbon blacks. FIG. 6 to FIG. 8 respectively show the Raman spectra of the carbon blacks prepared in Examples 1 to 3 of the present invention. As can be seen from the figures, the Raman spectra of the carbon blacks prepared by the present invention have three characteristic peaks: the D Raman scattering peak, the G Raman scattering peak, and the 2D Raman scattering peak, respectively. For the carbon blacks prepared in Examples 1 to 3, the full width at half maximum of the 2D Raman scattering peak (Δ2D) in the range of 2648-2660 cm⁻¹ was 90 cm⁻¹, 80 cm⁻¹, and 85 cm⁻¹, respectively. Herein, the 2D Raman scattering peak was a symmetrical sharp single peak, and a peak position of the 2D Raman scattering peak was shifted to the left compared with the peak position of typical bulk graphite (approximately 2710 cm⁻¹). It is precisely a characteristic peak that distinguishes graphene from the bulk graphite. This also confirms the presence of the graphene-like sheet protrusions in the carbon black of the present invention, which is also consistent with TEM results.

In addition, the 2D Raman scattering peak shows a relatively strong correlation with structure and stacking method of the graphene layers. Generally, the fewer the number of graphene layers is, the sharper and the more symmetrical the 2D Raman scattering peak is. The 2D Raman scattering peak of the carbon black prepared in the present invention exhibited symmetry, and I_{2D}/I_{G} was 0.55, 0.87, and 0.70, respectively. The I_{2D}/I_{G} of conventional high-quality monolayer graphene is 2. As the ratio decreased, the number of graphene layers increased, while excluding the contribution of the Raman scattering of graphite layers on the surfaces of the spherical bodies of the carbon black to G peak in the Raman spectrum of the carbon black, the I_{2D}/I_{G} of the carbon black prepared in the present invention ranges from 0.55 to 0.87, indicating a relatively small number of graphene-like sheet protrusions of the carbon black, which is also consistent with the TEM results. When the I_{2D}/I_{G} of the prepared carbon black ranges from 0.55 to 0.87, the graphene-like sheet protrusions of the carbon black can exhibit unique flexibility of graphene sheets and can improve surface contact between the graphene-like sheet protrusions and between the graphene-like sheet protrusions and the spherical bodies of the carbon black. Therefore, the carbon black can possess excellent electrical conductivity.

Further, the La of the carbon blacks prepared in Examples 1 to 3 calculated by the Raman spectra are 40 Å, 51 Å, and 32 Å, respectively, indicating that the carbon black prepared in the present invention has a relatively high degree of graphitization.

Moreover, the degree of graphitization of the carbon black is further characterized by the degree of crystallinity. As measured by Raman spectroscopy, the degree of crystallinity of the carbon blacks prepared in specific Examples 1 to 3 was 46%, 52%, and 42%, respectively, further demonstrating that the carbon blacks prepared in the present invention can achieve a high degree of graphitization. Therefore, when used as a conductive material in batteries, their high electrical conductivity can improve battery capacity and electrical characteristics.

Characteristic information of the carbon blacks from different examples and comparative examples of the present invention obtained according to the Raman spectra is listed in Table 3.

**Table 3 Characteristic Information in Different Examples and Comparative Examples**

| No. | Peak Position of 2D Raman Scattering Peak (cm⁻¹) | Full Width at Half Maximum of 2D Raman Scattering Peak (cm⁻¹) | I_{2D}/I_{G} | La (Å) | Crystallinity I_{G}/I_{G+D} |
|---|---|---|---|---|---|
| Example 1 | 2651 | 90 | 0.55 | 40 | 46% |
| Example 2 | 2648 | 80 | 0.87 | 51 | 52% |
| Example 3 | 2660 | 85 | 0.70 | 32 | 42% |
| Comparative Example 1 | / | / | / | 14 | 24% |
| Comparative Example 2 | / | / | / | 32 | 40% |

As can be seen from Table 3, the carbon black of the present invention further satisfies that in the 2D Raman spectrum with the excitation wavelength of 532 nm, the full width at half maximum of the 2D Raman scattering peak (Δ2D) in the range of 2648-2660 cm⁻¹ ranged from 80 cm⁻¹ to 90 cm⁻¹; the ratio of the peak intensity of the 2D Raman scattering peak to the peak intensity of the G Raman scattering peak ranged from 0.55 to 0.87; the La ranged from 32 Å to 51 Å; and the degree of crystallinity ranged from 42% to 52%, indicating that when the number of graphene layers, the stacking method, and the edge structure of the graphene-like sheet protrusions in the carbon black of the present invention meet certain conditions, it is beneficial to further improving the electrical conductivity of the carbon black.

### Experimental Example 3

The BET specific surface area of the carbon blacks in different examples and comparative examples was tested according to GB/T 19587-2004. The powder resistivity of the carbon blacks in different examples and comparative examples was tested using a semiconductor powder resistivity tester (model FZ-2006), and test samples were prepared using a mold under a pressure of 83.5 kg. The DBP oil absorption value of the carbon blacks in different examples and comparative examples was determined using the standard method in GB/T 3780.2-2017 Carbon black Part 2: Determination of oil absorption number. Specific test results are listed in Table 4.

**Table 4 Test Results of BET Specific Surface Area, Powder Resistivity, and DBP Oil Absorption Value in Different Examples and Comparative Examples**

| No. | BET Specific Surface Area (m²/g) | Powder Resistivity (Ω/cm) | DBP Oil Absorption Value (cm³/100g) |
|---|---|---|---|
| Example 1 | 65 | 0.13 | 235 |
| Example 2 | 85 | 0.153 | 260 |
| Example 3 | 180 | 0.206 | 375 |
| Comparative Example 1 | 60 | 0.121 | 230 |
| Comparative Example 2 | 60 | 0.215 | 228 |

As can be seen from Table 4, the BET specific surface area of the carbon black of the present invention is relatively high, indicating a well-developed porous structure therein, which increases the number of contact points between the carbon black and other substances, such as the active material in the electrode, enabling full utilization of the electrical conductivity of the carbon black. In addition, the carbon black of the present invention has a relatively low powder resistivity, indicating a significant improvement in the electrical conductivity compared with conductive material carbon blacks of the same type. The void volume within carbon black aggregates can be characterized by the DBP oil absorption value. The carbon black of the present invention has a relatively high DBP oil absorption value, indicating that the carbon black of the present invention has a well-developed chain-branch structure and a well-developed conductive network.

Further, the powder resistivity of the electrode slurries in Example 4 and Comparative Examples 1 and 2 was tested. The specific testing method included: drying various electrode slurries under vacuum at 130 °C for 3 h and pulverizing to obtain powder; and then conducting the test using the semiconductor powder resistivity tester (model FZ-2006), wherein testing samples were prepared using a mold under a pressure of 83.5 kg. Test results are listed in Table 5.

**Table 5 Powder Resistivity of Different Electrode Slurries**

| Test Item | Example 4-1 | Example 4-2 | Example 4-3 | Comparative Example 1 | Comparative Example 2 |
|---|---|---|---|---|---|
| Powder resistivity (Ω/cm) | 345 | 300 | 360 | 612 | 520 |

It can be seen from the above test results that the powder resistivity of the electrode material prepared with the carbon black of the present invention is significantly lower than that of the electrode material prepared with the carbon black of the comparative examples. It can be seen that the structures of the graphene-like sheet protrusions of the carbon black of the present invention are conducive to increasing the surface contact between the active material and the carbon black, as well as between the carbon blacks, thereby significantly improving the electrical conductivity of the slurry and the electrode material.

Finally, it should be noted that: the above various embodiments are only used to illustrate the technical solutions of the present invention and are not intended to be limiting. Although the present invention has been described in detail with reference to the preceding various embodiments, those ordinarily skilled in the art should understand that modifications still can be made to the technical solutions described in the preceding various embodiments, or equivalent substitutions can be made to some or all of the technical features thereof. These modifications or substitutions do not make the essence of the corresponding technical solutions depart from the scope of the technical solutions of various embodiments of the present invention.

### INDUSTRIAL APPLICABILITY

The carbon black of the present invention has the properties of both carbon black and graphene, and the point-to-surface contact can be formed between the primary particles or with the electrode material particles, thereby improving the electrical conductivity, enabling significant improvement in the electrical conductivity of the slurry and the electrode. Moreover, the preparation method is simple, showing promising prospects for industrial applications.

## Claims

1. A highly conductive carbon black, **characterized in that** an average particle size of primary particles of the carbon black ranges from 20 nm to 40 nm; and
the primary particles of the carbon black each comprise a spherical body and graphene-like sheet protrusions located on a surface of the spherical body.

2. The highly conductive carbon black according to claim 1, **characterized in that** the graphene-like sheet protrusions are multilayer graphene;
preferably, a number of layers of the multilayer graphene is ≤10; and
preferably, the number of layers of the multilayer graphene ranges from 2 to 8.

3. The highly conductive carbon black according to claim 1 or 2, **characterized in that** a maximum distance between any two points in the graphene-like sheet protrusions ranges from 10 nm to 50 nm.

4. The highly conductive carbon black according to any one of claims 1 to 3, **characterized in that** the carbon black is acetylene black.

5. The highly conductive carbon black according to any one of claims 1 to 4, **characterized in that** the graphene-like sheet protrusions are grown in situ on the surface of the spherical body.

6. The highly conductive carbon black according to any one of claims 1 to 5, **characterized in that** the carbon black has a BET specific surface area ranging from 65 m²/g to 180 m²/g, and a DBP oil absorption value ranging from 235 m²/g to 375 cm³/100g.

7. The highly conductive carbon black according to any one of claims 1 to 6, **characterized in that** a 2D Raman spectrum of the carbon black at an excitation wavelength of 532 nm satisfies at least one of following properties:
(1) a full width at half maximum of a 2D Raman scattering peak (Δ2D) in a range of 2648-2660 cm⁻¹ ranges from 80 cm⁻¹ to 90 cm⁻¹;
(2) a ratio of a peak intensity of the 2D Raman scattering peak to a peak intensity of a G Raman scattering peak ranges from 0.55 to 0.87; and
(3) a Raman microcrystallite planar size ranges from 32 Å to 51 Å.

8. The highly conductive carbon black according to any one of claims 1 to 7, **characterized in that** a degree of crystallinity of the carbon black ranges from 42% to 52%; and
preferably, the degree of crystallinity of the carbon black ranges from 46% to 52%.

9. The highly conductive carbon black according to any one of claims 1 to 8, **characterized in that** a powder resistivity of the carbon black ranges from 0.13 Ω/cm to 0.206 Ω/cm.

10. A preparation method for the highly conductive carbon black according to any one of claims 1 to 9, **characterized by** comprising a step of:
subjecting acetylene and methane to a thermal pyrolysis reaction in a hydrogen gas-containing and air-isolated environment to form the carbon black, wherein
flow rates of the acetylene, the methane, and the hydrogen gas are adjusted to allow a molar ratio of H to C in a thermal pyrolysis reaction zone to be >1.

11. The preparation method according to claim 10, **characterized in that** the molar ratio of H to C in the thermal pyrolysis reaction zone ranges from 2 to 3.

12. The preparation method according to claim 10 or 11, **characterized in that** gas flow directions of the acetylene and the methane are opposite; and a gas flow direction of the hydrogen gas is arranged at an included angle to the gas flow directions of the acetylene and the methane; and
preferably, the included angle ranges from 45° to 60°.

13. A device configured to implement the preparation method according to any one of claims 10 to 12, **characterized by** comprising: a pyrolysis furnace body, provided therein with a reaction chamber, wherein
the pyrolysis furnace body is provided with two nozzles communicating with the reaction chamber; the pyrolysis furnace body is provided with a furnace head corresponding to the two nozzles; and the furnace head is provided with at least one gas introduction tube communicating with the reaction chamber; and
the two nozzles comprise a first nozzle and a second nozzle.

14. The device according to claim 13, **characterized by** comprising two gas introduction tubes, wherein the two gas introduction tubes are provided opposite to each other on two sides of the furnace head.

15. The device according to claim 12 or 13, **characterized in that** a central axis of the gas introduction tube is arranged at an included angle to a central axis of the furnace head; and
preferably, the included angle ranges from 30° to 45°.

16. An electrode, **characterized by** comprising the carbon black according to any one of claims 1 to 9 or the carbon black prepared by the preparation method according to any one of claims 10 to 12.

17. A secondary battery, **characterized by** comprising a positive electrode, a negative electrode, an electrolyte, and a separator, wherein at least one of the positive electrode and the negative electrode is the electrode according to claim 16.
